# EUROPÄISCHE PATENTANMELDUNG

(11) **EP 2 327 813 A1**
(43) Veröffentlichungstag der Anmeldung: **01.06.2011**
(21) Anmeldenummer: 09014131.8
(22) Anmeldetag: 11.11.2009
(51) Int. Cl.: C23G 5/00, F01D 25/00, B23K 1/20, F01D 5/00

(54) **Verstärkte Fluor-Ionen-Reinigung von verunreinigten Rissen**

(71) Anmelder: SIEMENS AKTIENGESELLSCHAFT, 80333 München (DE)
(72) Erfinder: Bast, Ulrich, 81667 München (DE); Ott, Michael, 45470 Mülheim an der Ruhr (DE)

(57) **Zusammenfassung**

Der bisherige FIC-Reinigungsprozess von oxidierten Rissen (5) wird verbessert durch vorheriges Einbringen von fluorhaltigem Material (16) in den Riss (5).

## Beschreibung

Die Erfindung betrifft die Fluor-Ionen-Reinigung von verunreinigten Rissen.

Während des Betriebs können sich in Gasturbinenschaufeln aus y'-verstärkten Ni-Legierungen Ermüdungsrisse bilden. Diese Risse können eine Tiefe von mehr als einem Millimeter erreichen. Ihre Weite beträgt, besonders am Rissende manchmal nur wenige Mikrometer. Aufgrund der hohen Betriebstemperaturen oxidiert die Ni-Basislegierung und auf den Rissflanken bilden sich Oxidschichten, die im Wesentlichen aus Titanoxid, Chromoxid und Aluminiumoxid bestehen. Risse dieser Art werden im Rahmen von Servicemaßnahmen durch Lötverfahren geschlossen, damit die teuren Schaufeln wiederverwendet werden können (Refurbishment). Voraussetzung für die erfolgreiche Lötung ist aber, dass die Oxidschichten in den Rissen restlos entfernt werden, um eine vollständige Benetzung der Rissflanken und eine optimale Adhäsion des Lots zu gewährleisten. Daraus ergibt sich die Notwendigkeit einer effizienten und gründlichen Reinigungsmethode.

Zur Rissreinigung wird heute hauptsächlich das Fluoride Ion Cleaning (FIC) Verfahren in verschiedenen Ausprägungen eingesetzt. Bei dem so genannten Dayton-Verfahren (US 4,188,237) wird in einem Hochtemperaturprozess (400° - 1200°C) eine Reaktion der Metalloxide mit fluorhaltigem Gas herbeigeführt, die zur Bildung von Metallfluoriden führt. Diese sind bei hoher Temperatur flüchtig, zurück bleibt das reine Metall. Das Fluorgas füllt den Reaktionsraum und fließt zusammen mit dem Trägergas über das Werkstück. Der Prozess läuft bei Atmosphärendruck ab.

Bei sehr tiefen und gleichzeitig engen Rissen ist das Reinigungsergebnis aber in vielen Fällen aber noch nicht ausreichend.

Es ist daher Aufgabe der Erfindung, dieses Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen
- Figur 1: schematisch den Ablauf des Verfahrens nach dem Stand der Technik,
- Figur 2: ein verbessertes Verfahren.
- Figur 3: eine Gasturbine
- Figur 4: eine Turbinenschaufel
- Figur 5: eine Brennkammer
- Figur 6: eine Liste von Superlegierungen.

Die Beschreibung und die Figuren zeigen nur Ausführungsbeispiele der Erfindung.

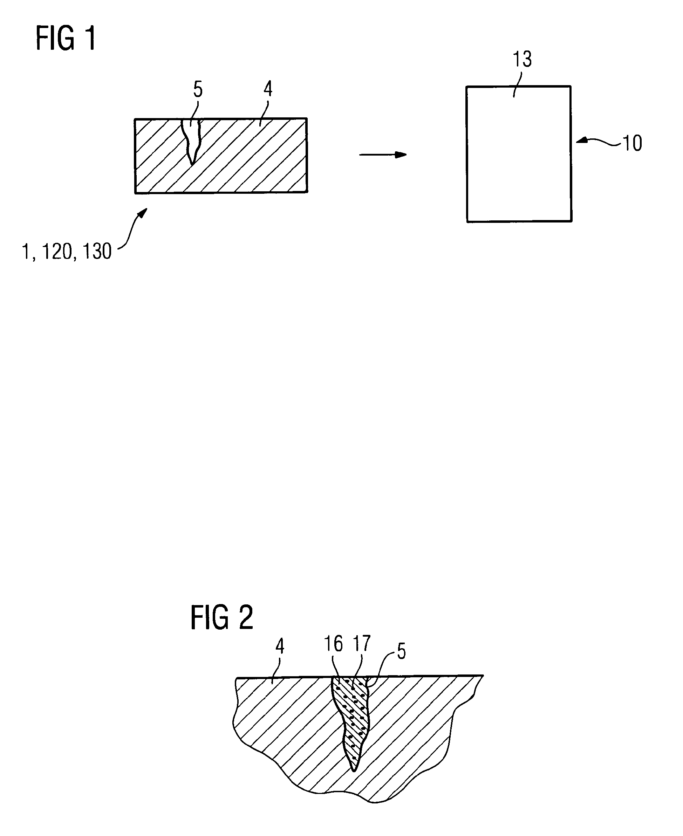

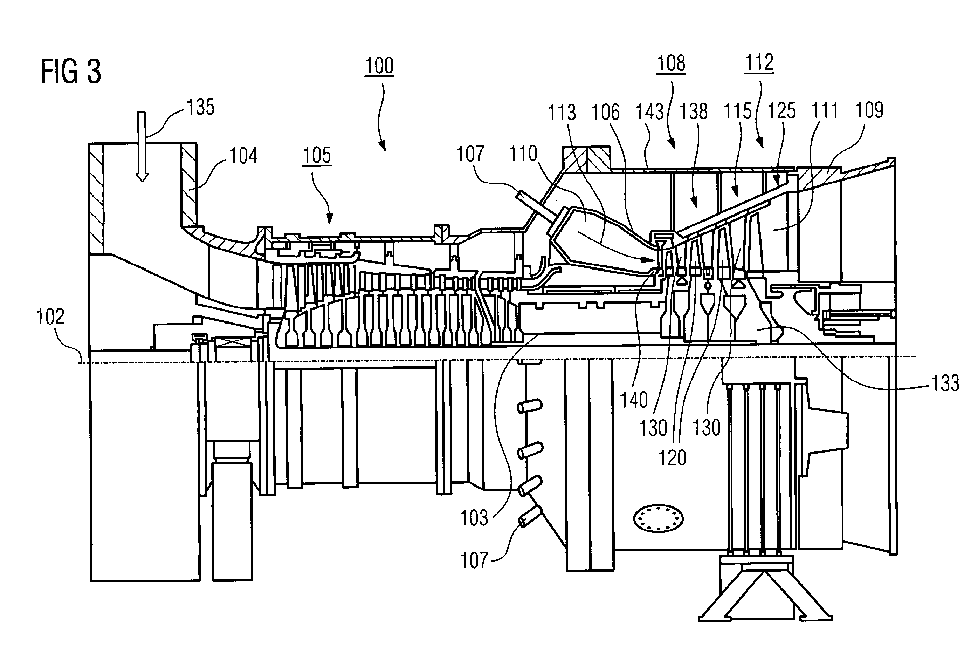

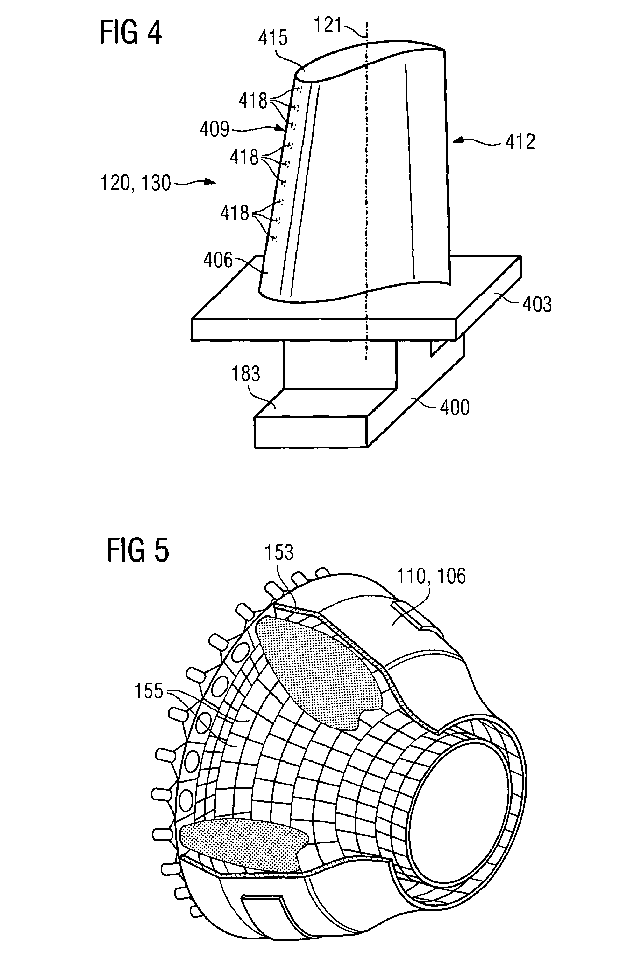

Figur 1 links zeigt ein Substrat 4 eines Bauteils 1 (Fig. 4, 5), insbesondere einer Turbine, ganz insbesondere einer Gasturbine 100 (Fig. 3).

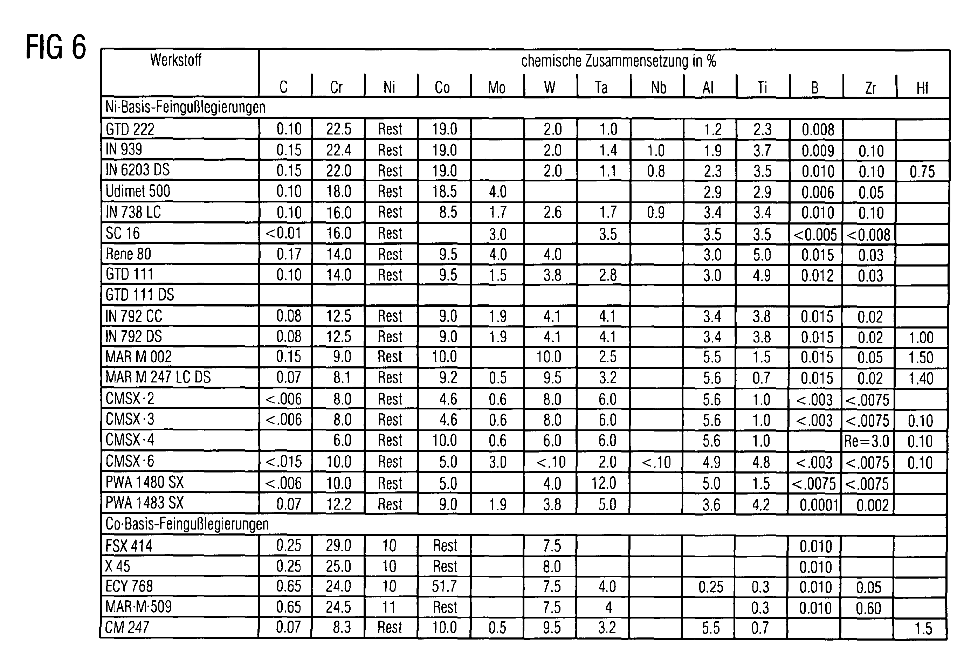

Das Bauteil 1 ist insbesondere eine Turbinenschaufel 120, 130 oder ein Bauteil 155 einer Brennkammer, das wie die Turbinenschaufeln 120, 130 in der Regel auch eine Superlegierung gemäß Figur 6 aufweist.

Das Substrat 4 weist zumindest einen Riss 5 auf, in dem Ablagerungen wie z.B. Oxide oder andere Korrosionsprodukte (nicht dargestellt) vorhanden sind, die entfernt werden sollen.

Nach dem Stand der Technik werden ein oder mehrere solcher Bauteile 1, 120, 130 in eine FIC-Kammer 10 eingebracht, in der durch ein entsprechendes Gas 13 das Fluorid-Ion-Cleaning (FIC) durchgeführt wird.

Erfindungsgemäß wird vor dem Einführen des Bauteils 1, 120, 130 in die FIC-Kammer 10 Material 16 in den Riss 5 eingebracht.

Vorzugsweise wird reaktives, ganz insbesondere fluorhaltiges Material 16 verwendet. Reaktiv bedeutet hier, dass das reaktive Material 16 mit den Oxiden oder Korrosionsprodukten in dem Riss 5 des Substrats 4 reagiert und die Reaktionsprodukte vorzugsweise sich auch noch selbstständig verflüchtigen können.

Vorzugsweise in Form eines Sols wird das Material 16 in die Risse 5 infiltriert und vorzugsweise dort getrocknet. Vorzugsweise handelt es sich bei dem Sol um eine Dispersion von Partikeln 17 aus fluorhaltigen Polymeren (vorzugsweise Polytetrafluorethylen = PTFE).

Die Partikel, das Sol weisen vorzugsweise in ein wässriges oder nicht-wässriges Dispergiermittel auf.

Die Partikel 17 weisen vorzugsweise eine Korngröße ≤ 200nm, ganz vorzugsweise einen Durchmesser von unter 100nm auf und sind vorzugsweise gegen die Bildung von Agglomeraten stabilisiert. Dadurch können die Partikel auch in extrem enge Spalte und Zwischenräume innerhalb der Oxidschichten in den Rissen eindringen.

Die Infiltration des Sols erfolgt vorzugsweise im Vakuum, um Luftblasen zu vermeiden und um eine gute Füllung der Risse zu gewährleisten.

Anschließend wird der FIC-Reinigungsprozess an diesen mit dem vorzugsweise vorgetrockneten mit Material 16 aufgefüllten Rissen 5 Bauteilen 120, 130 in eine FIC-Kammer eingebracht und nach dem bekannten Verfahren erstmalig durchgeführt. Erst dann kommt die Reaktionsfähigkeit des Materials 16 zum Einsatz.

Das wichtigste über den Stand der Technik hinausgehende Merkmal ist die Vorbehandlung der Risse 5 durch die Füllung mit dem Material in einer hohen Konzentration.

Dies wird vorzugsweise durch die Infiltration eines Sols erreicht, d.h. einer Dispersion, die die entsprechenden Partikel 17 enthält. Die Stabilisierung der Partikel 17 ermöglicht auch eine gute Benetzung der Rissoberfläche durch die Dispersion, wodurch ebenfalls ein gutes Eindringen in die langen und engen Risse ermöglicht wird. Entscheidend ist hierbei, dass die Fluorkonzentration durch die Zersetzung der Partikel 16 im Riss lokal stark erhöht wird, d.h. reaktiven Restmitteln, vorzugsweise die reaktiven Fluorionen werden nicht nur durch Gasatmosphäre in den Kammern, sondern dort erzeugt, wo die Reaktion stattfindet. Als Folge wird der Reinigungsgrad verbessert und die erforderliche Prozesszeit verkürzt.

In einem Ausführungsbeispiel wird eine PTFE-Dispersion für die Reinigung von Rissen in Turbinenschaufeln aus einer Ni-Basis-Legierung verwendet. Hierbei handelt es sich um eine Dispersion von PTFE mit einem Feststoffanteil von vorzugsweise 50 Gew.-% in wässriger, vorzugsweise ammoniakalischer Lösung. Vorzugsweise werden deutlich kürzere Polymerketten verwendet. Die mittlere Partikelgröße liegt bei etwa 80 Nanometer. Das Material "fibriliert" nicht bei Scherung und neigt daher weniger zur Agglomeration. Der vorzugsweise benutzte Netzmittelanteil von 7% - 8% ermöglicht eine gute Benetzung des Substratmaterials und ermöglicht ein sehr gutes Eindringen der Dispersion 16 in den Riss 5.

Die Figur 3 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0, 4Y-2Re oder Ni-25Co-17Cr-10A1-0, 4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zur Reinigung von zumindest einem Riss (5) zumindest eines Substrats (4) mittels eines FIC-Prozesses in einer FIC-Kammer (10),
die (10) zur Durchführung eines FIC-Prozesses geeignet ist, bei dem vor dem Einführen des zumindest eines Substrats (4) in die FIC-Kammer (10) ein reaktives, insbesondere fluorhaltiges Material (16) in den zumindest einen Riss (5) eingebracht wird,
und dann der FIC-Prozess erstmalig durchgeführt wird.

2. Verfahren nach Anspruch 1,
bei dem als Material (16) ein Sol in den Riss (5) eingebracht wird.

3. Verfahren nach Anspruch 1 oder 2,
bei dem als Material (16) fluorhaltige Polymere verwendet werden.

4. Verfahren nach Anspruch 3,
bei dem das Material (16) Polytetrafluorethylen (PTFE) aufweist.

5. Verfahren nach Anspruch 3 oder 4,
bei der die Länge der Polymerketten ≤ 80nm beträgt.

6. Verfahren nach Anspruch 1, 2, 3 oder 4,
bei dem das Material (16) in einer Dispersion in den Riss (5) eingebracht wird.

7. Verfahren nach Anspruch 6,
bei dem der Feststoffanteil ≤ 50vol% beträgt, insbesondere ≥ 10%.

8. Verfahren nach Anspruch 1, 2, 3, 4, 5, 6 oder 7,
bei dem das Material (16) in einer basischer Lösung eingebracht wird,
vorzugsweise in Ammoniak.

9. Verfahren nach Anspruch 1, 2, 3, 4, 5, 6, 7 oder 8,
bei dem vor dem Einführen des Substrats (4) in die FIC-Kammer (10) das Material (16) im Riss (5) getrocknet wird.

10. Verfahren nach Anspruch 1, 2, 3, 4, 5, 6, 7, 8 oder 9,
bei dem das Material (16) Partikel (17) aufweist,
wobei die Partikel (17) insbesondere eine Korngröße von
≤ 200nm,
ganz insbesondere ≤ 100nm aufweisen.

11. Verfahren nach Anspruch 2, 3, 4, 5, 6, 7, 8, 9 oder 10,
bei dem ein Netzmittelanteil benutzt wird,
vorzugsweise mit 7% bis 8%.
